(19) **Europäisches Patentamt**
**European Patent Office**
**Office européen des brevets**

(11) **EP 0 965 570 B1**

(12) **EUROPEAN PATENT SPECIFICATION**

(45) Date of publication and mention
of the grant of the patent:
**18.09.2002  Bulletin 2002/38**

(51) Int Cl.⁷: **C03C 3/087**, C03C 4/02,
C03C 4/08

(21) Application number: **99109291.7**

(22) Date of filing: **27.05.1999**

(54) **Ultraviolet/infrared absorbent middle transmittance green glass**

Ultraviolett/Infrarot-absorbierendes Glas mit mittlerer Durchlässigkeit

Verre à moyenne transmission absorbant les rayonnements ultraviolets/infrarouges

(84) Designated Contracting States:
**DE FR GB IT**

(30) Priority: **17.06.1998  JP 16999098**

(43) Date of publication of application:
**22.12.1999  Bulletin 1999/51**

(73) Proprietor: **NIPPON SHEET GLASS CO. LTD.**
**Chuo-ku Osaka-shi Osaka-fu (JP)**

(72) Inventors:
• **Seto, Hiromitsu, Nippon Sheet Glass Co., Ltd.**
**Osaka-shi, Osaka (JP)**
• **Nagashima, Yukihito,**
**Nippon Sheet Glass Co., Ltd.**
**Osaka-shi, Osaka (JP)**
• **Yoshii, Shigekazu, Nippon Sheet Glass Co., Ltd.**
**Osaka-shi, Osaka (JP)**

(74) Representative: **Kraus, Walter, Dr. et al**
**Kraus & Weisert,**
**Thomas-Wimmer-Ring 15**
**80539 München (DE)**

(56) References cited:
**EP-A- 0 825 156**          **WO-A-96/00194**
**GB-A- 2 274 841**

**Description**

BACKGROUND OF THE INVENTION AND RELATED ART STATEMENT

The present invention relates to an ultraviolet/infrared absorbent middle transmittance green glass. More particularly, it relates to the glass which has a greenish color shade so that it is suitable to be arranged adjacently with glass having a greenish color shade and a high visible light transmittance. It also relates to the glass which has a middle visible light transmittance, a low solar energy transmittance, and a low ultraviolet transmittance, so that it is useful for a privacy protecting glass of a vehicle.

Recently, a variety of glasses with ultraviolet/infrared absorptivity to be used as a vehicle windshield have been proposed with the view of preventing degradation of luxurious interior materials and reducing cooling load of the vehicle.

A front windshield of a vehicle is obligated to have a visible light transmittance higher than a specific level for enough visibility of a driver. An ultraviolet and heat rays absorbent glass mounted in the windshield has a greenish color shade because visible rays having wavelengths near the ultraviolet range and the infrared range are also absorbed by the glass.

A glass for a rear window of a vehicle has no obligation such as the front windshield, and a glass with relatively low visible light transmittance is preferably used for a rear windshield of a vehicle in view of privacy protection. A glass having almost neutral color such as grayish color shade has been used for the glass having a low visible light transmittance.

A colored glass disclosed in the PCT 6-503300 consists of soda-lime-silica glass including colorants consisting of 0.45 to 2.5 weight percent $Fe_2O_3$ (total iron), 0.001 to 0.02 weight percent CoO, 0 to 0.0025 weight percent Se, and 0 to 0.1 weight percent $Cr_2O_3$. The solar energy transmittance (TG) of the glass is lower than the luminous transmittance measured by C.I.E. illuminant A (TLA). The glass with a thickness of 3.85 mm has a solar energy transmittance in a range of 10 to 48 percent and a luminous transmittance in a range of 20 to 60 percent.

A dull gray or green colored heat rays absorbent glass with a low transmittance disclosed in the PCT 9-509391 consists of soda-lime-silica glass including colorants consisting of 0.90 to 1.90 weight percent $Fe_2O_3$ (total iron), 0.002 to 0.25 weight percent CoO, 0.0010 to 0.0060 weight percent Se, and 0.1 to 0.2 weight percent $TiO_2$. The glass with a thickness of 4 mm has a luminous transmittance in a range from 10.0% to 60.0% measured by using C.I.E illuminant A, an ultraviolet transmittance of less than 25.0%, an infrared transmittance of less than 50.0%, a dominant wavelength in a range from 480 to 575.5 nanometers by C.I.E. illuminant C, and an excitation purity of less than 6.0%.

A colored glass disclosed in the WO 97/30948 consists of soda-lime-silica glass including colorants consisting of 1 to 3 weight percent $Fe_2O_3$ (total iron), 0.1 to 1.0 weight percent $TiO_2$, 0 to 500 ppm $Co_3O_4$, and a value of FeO in a range from 10% to about 37%. The glass with a thickness of 4 mm has a visible light transmittance in a range from 10% to about 70% measured by C.I.E illuminant A.

A soda-lime-silica glass disclosed in the PCT 8-506314 has a neutral color by including primary iron given by the following expression:

$$FeO \text{ (weight percent)} \geqq 0.007+(\text{optical concentration } -0.036)/2.3$$

and 0.25 to 1.75 weight percent $Fe_2O_3$ and at least one selected from a group consisting of Se, $Co_3O_4$, $Nd_2O_3$, NiO, MnO, $V_2O_5$, $CeO_2$, $TiO_2$, CuO, and SnO. The glass with a thickness of 4 mm exhibits a luminous transmittance of more than 32%, an ultraviolet transmittance of less than 25%, a solar energy transmittance at least 7% less than the luminous transmittance, and a dominant wavelengths preferably less than 570 nanometers. Certain embodiments thereof may be used as a privacy protection glass.

The colored glass disclosed in the above PCT 6-503300 includes $Fe_2O_3$ and CoO and Se and/or $Cr_2O_3$ is added thereto. The examples in the PCT 6-503300 exhibit that Se is added to reduce the excitation purity and to be harmonized with a glass having a brighter green color shade. However, a great quantity of Se is unpreferable for the environment because Se has toxicity and is easy to vaporize. $Cr_2O_3$ sometimes forms cromite stones in the melting process and fluxes into products to cause a defect. As the crome with an octahedral coordination has toxicity and is harmful to the environment, it is unpreferable to be added to the glass.

A dull grayish green colored heat rays absorbent glass with a low transmittance disclosed in the PCT 9-509391 including 0.1 to 2.0 weight percent $TiO_2$ as an essential component is unpreferable because $TiO_2$ is expensive to increase the batch cost. Besides, the glass is not harmonious with a brighter green colored glass when arranged adjacently each other because of its dull grayish green color shade.

The glass disclosed in the above WO 97/30948 also includes $TiO_2$ in a range from 0.1 to 1.0 weight percent as an essential component to increase unpreferably the batch cost.

The glasses having a middle visible light transmittance among the glasses disclosed in the PCT 8-506314 are provided with a halftone color shade due to the colorants such as Fe, Ni, Se, Co, in the components. Any of the samples includes unpreferably a large amount of Se. Among them, the glass including Fe of more than 1.0 weight percent is unpreferable to be used for a windshield of a vehicle in view of safety since the sample with a thickness of 4 mm has a visible light transmittance of less than 40% and has a too dark shade. The glass has a dull grayish green color so that it is unharmonious with a brighter green colored glass in case of arrangement.

Through the aforementioned glass with a low visible light transmittance is superior in view of privacy protection, an occupant in a vehicle cabin sees outside quit unclearly through the glass. In case that a high mounted breaking lamp is employed in a cabin of a vehicle, the glass having a low visible light transmittance is not suitable for a rear window because of its poor visibility. On the other hand, a glass with a middle transmittance can be sufficient to some extent for both privacy protection and safety.

Moreover, reference is made to EP 0 825 156 A1 and WO 96/00194.

EP 0 825 156 A1 discloses ultraviolet/infrared absorbent low transmittance glass having an almost neutral color such as turquoise blue and deep green and exhibiting low or middle visible light transmittance, low total solar energy transmittance, and low ultraviolet transmittance consisting of base glass comprising: 65 to 80 wt.% $SiO_2$; 0 to 5 wt.% $Al_2O_3$; 0 to 10 wt.% MgO; 5 to 15 wt.% CaO (within such a range that total amount of MgO and CaO becomes 5 to 15 wt.%); 10 to 18 wt.% $Na_2O$; 0 to 5 wt.% $K_2O$ (within such a range that total amount of $Na_2O$ and $K_2O$ becomes 10 to 20 wt.%); and o to 5 wt.% $B_2O_3$, and colorants including: 1.2 to 2.2 wt.% total iron oxide ($T\text{-}Fe_2O_3$) converted to $Fe_2O_3$; 0.001 to 0.03 wt.% CoO; o to 0.0008 % Se; and 0 to 0.2 % NiO.

WO 96/00194 describes a silica-soda-lime glass composition suitable for making glazing. Said glass consists of 69-75 wt% $SiO_2$, 0-3 wt% $Al_2O_3$, 0-5 wt% $B_2O_3$, 2-10 wt% CaO, 0-2 wt% MgO, 9-17 wt% $Na_2O$, 0-8 wt% $K_2O$, 0.2-4 wt% $Fe_2O_3$ (total iron), and 0-0.45 wt% Se, CoO, $Cr_2O_3$, NiO, CuO. The amount of tinting agents other than iron is at least 0.0002 wt% when the $Fe_2O_3$ content is 0.5 wt% or less. The composition may also contain fluorine; zinc, zirconium, cerium and titanium oxides; and less than 4 wt% barium oxide; while the sum of the percentages of alkaline earth oxides is not above 10 wt%.

## OBJECT AND SUMMARY OF THE INVENTION

It is an object of the present invention to provide an ultraviolet/infrared absorbent middle transmittance glass which has a greenish color shade so that it is suitable to be arranged adjacently with the ultraviolet/infrared absorbent glass having a green color shade and a high visible light transmittance. The present invention aims to provide the glass which has a middle visible light transmittance, a low solar energy transmittance and a low ultraviolet transmittance so that it is useful for a privacy protecting glass of a vehicle.

The ultraviolet/infrared absorbent middle transmittance glass of the present invention consists of a base glass, that is, the major constituents comprising:

65 to 80 wt. % $SiO_2$;
0 to 5 wt. % $Al_2O_3$;
0 to 10 wt. % MgO;
5 to 15 wt. % CaO wherein a total amount of MgO and CaO is between 5 and 15 wt. %;
10 to 18 wt. % $Na_2O$;
0 to 5 wt. % $K_2O$ wherein a total amount of $Na_2O$ and $K_2O$ is between 10 and 20 wt. %; and
0 to 5 wt. % $B_2O_3$,

and a colorant including:

1.0 to 1.7 wt. % total iron oxide ($T\text{-}Fe_2O_3$) expressed as $Fe_2O_3$;
0.001 to 0.02 wt. % NiO; and
0 to 8oppm CoO,

the glass with a thickness between 2 mm and 6 mm has a dominant wavelength measured by using C.I.E. illuminant C in a range from 490 nm to 550 nm, an ultraviolet transmittance (Tuv) defined by ISO of not greater than 15 %, and an excitation purity of less than 8 %, wherein FeO expressed as $Fe_2O_3$ is between 10 wt.% and 40 wt.% of $T\text{-}Fe_2O_3$.

## DETAILED DESCLIPTION OF PREFERRED EMBODIMENTS

The description will be made as regard to an ultraviolet/infrared absorbent middle transmittance glass composition. It should be noted that components will be represented with percentage by weight.

SiO$_2$(silica) is a principal component for forming skeleton of glass. Less than 65% SiO$_2$ lowers the durability of the glass and more than 80% SiO$_2$ raises the melting temperature of the glass so high.

Al$_2$O$_3$ is a component for improving the durability of the glass. More than 5% Al$_2$O$_3$ raises the melting temperature of the glass so high. The preferable range of Al$_2$O$_3$ is between 0.1% and 2%.

MgO and CaO improve the durability of the glass and adjust a devitrification temperature and viscosity of the glass during molding. More than 10% MgO raises the devitrification temperature. Less than 5% or more than 15% CaO raises the devitrification temperature of the glass. The durability of the glass is lowered when the total amount of MgO and CaO is less than 5%, while the devitrification temperature is increased when the total exceeds 15%.

Na$_2$O and K$_2$O prompt the glass to melt. The efficiency of promotion of melting becomes poor when Na$_2$O is less than 10% or the total of Na$_2$O and K$_2$O is less than 10%, while the durability of the glass is lowered when Na$_2$O exceeds 18% or the total of Na$_2$O and K$_2$O exceeds 20%. K$_2$O is preferable not to exceed 5% because of its expensive cost.

B$_2$O$_3$ is a component for improving the durability of the glass, prompting to melt, and yet enhancing the ultraviolet absorption. B$_2$O$_3$ should be less than 5%, since the transmittance is reduced also at a visible range, so that the color of the glass is easy to tint yellow and difficulties during molding are caused due to the vaporization of B$_2$O$_3$ when B$_2$O$_3$ exceeds 5%.

Iron oxide is present in the form of Fe$_2$O$_3$ and the form of FeO in the glass. Fe$_2$O$_3$ is a component for improving the ultraviolet absorptivity and FeO is a component for improving the heat rays absorptivity.

When the total amount of iron oxide (T-Fe$_2$O$_3$) expressed as Fe$_2$O$_3$ is less than 1.0%, the efficiency of ultraviolet and infrared absorptivity becomes small so as not to provide desired optical properties. On the other hand, when T-Fe$_2$O$_3$ exceeds 1.7%, there is an unpreferable possibility that the temperature around a crown of a glass melting furnace exceeds its refractory temperature due to absorption of the heat rays by the ferrous oxide. In addition, in case of successively producing glasses by a glass melting furnace with a large amount of T-Fe$_2$O$_3$, long time is required to alter a glass composition in the furnace. The content of T-Fe$_2$O$_3$ is more preferable to be greater than 1.2% and not greater than 1.7%.

When the FeO/T-Fe$_2$O$_3$ ratio (a weight of FeO expressed as Fe$_2$O$_3$ against T-Fe$_2$O$_3$) is too low, the heat rays absorptivity can not be obtained sufficiently because of a small amount of FeO. While, when the FeO/T-Fe$_2$O$_3$ ratio is too high, a large amount of FeO reduces the visible light transmittance and makes the glass blue tint, since the effect of absorption by FeO extends the long-wave part of the visible portion. In addition, nickel sulfide stones are sometimes present in the molten glass because the molten glass is relatively reductive. Too high ratio of FeO/T-Fe$_2$O$_3$ is also unpreferable since it causes streaks with enough silica and silica scum. In the present invention, the FeO/T- Fe$_2$O$_3$ ratio in a range between 10 % and 40% brings a neutral color having high ultraviolet absorptivity and high heat rays absorptivity. In this case, values expressed as Fe$_2$O$_3$ are used for the content of FeO.

CoO is a component for forming a greenish color shade by cooperating with NiO and Fe$_2$O$_3$ for controlling the visible light transmittance. More than 80 ppm CoO makes the color too blue tint and reduces the visible light transmittance. When using CoO, the content thereof is preferable in a range of 5 to 80 ppm.

NiO is a component for controlling the visible light transmittance and reducing the excitation purity as like as CoO. Less then 0.001% NiO can not bring a sufficient efficiency. More than 0.02% NiO reduces the visible light transmittance and makes the glass too green tint. The content of NiO is therefore to be in a range between 0.001% and 0.02%.

It is known that the coordination number of NiO varies according to the rate of cooling glass so that the color of the glass varies. This is because the cooling varies the coordination number of oxide around Ni$^{2+}$ from 6 into 4 and thus varies the optical absorption. The absorption of Ni$^{2+}$ with octahedral coordination exists around 430 nanometers so as to contribute yellow to the glass, while the absorption of Ni$^{2+}$ with tetrahedral coordination exists from 500 to 640 nanometers. Therefore, the excitation purity would be reduced to obtain the preferable shade by using Ni$^{2+}$ with tetrahedral coordination. A major use for the glass of the present invention is in a windshield of a vehicle, which is normally reinforced by air blast cooling for safety. In the present invention, hence, the desired color shade can be obtained by discoloration due to the reinforcement process by air blast cooling.

CeO$_2$ is a component for improving the ultraviolet absorptivity and is present in the form of Ce$^{3+}$ or in the form of Ce$^{4+}$ in the glass. Particularly, Ce$^{3+}$ is effective in absorbing ultraviolet with less absorptivity in the visible range. TiO$_2$ is a component for improving the ultraviolet absorptivity particularly by interaction with FeO. Any component of both can be added to improve the ultraviolet absorptivity within such a range as not to lose the desired greenish color shade, or to add a yellow tint in order to obtain the desired color shade. The use of expensive CeO$_2$, TiO$_2$ increases the cost so that it is not preferable to use more than 1% CeO$_2$, TiO$_2$.

One or more than two among MnO, V$_2$O$_5$, MoO$_3$, CuO, Cr$_2$O$_3$, and the like may be added as colorant and SnO$_2$ within a range from 0% to 1% in total may be added as a reducing agent or an agent for clearing the glass in such a range as not to lose the desired color shade or properties. To further securely prevent the formation of nickel sulfide stones, ZnO may be added in a range from 0% to 1%.

In the present invention, the glass obtains the desired color shade without any injurious matter such as Se or Cr, so that the glass of this invention makes the load on the environment significantly lighter than the prior arts.

Hereinafter, the mode of carrying out the present invention will be described referring to some examples.

(Examples 1 through 10, Comparative Examples 1 through 5)

Glass raw material is prepared by adding required composition consisting of ferric oxide, titanium oxide, cerium oxide, cobalt oxide, metallic selenium, nickel oxide, carbonaceous reducing agent (concretely, carbon powder etc.). The glass raw material thus prepared is heated and melted in an electric furnace at 1500°C for 4 hours. The molten glass is flowed onto a stainless plate and annealed to the room temperature to obtain a 6mm thick glass plate. After polishing the glass plate in such a manner that the thickness reduces to 4 mm to become a sample.

Each sample is measured in the visible light transmittance by the C.I.E. illuminant A (YA), the solar energy transmittance (TG), the ultraviolet transmittance by ISO (Tuv), the dominant wavelength by the illuminant C (DW), and the excitation purity (Pe). And the chromaticity expressed as a* and b* is measured following C.I.E.L.A.B.

The samples of Examples 7 through 10 are reheated, and then cooled in blasting air to be reinforced, so that the optical properties of the samples before and after reinforcement are measured.

Tables 1 -3 show base glass compositions of the obtained samples, T-Fe$_2$O$_3$ concentration, FeO (expressed as Fe$_2$O$_3$)/T-Fe$_2$O$_3$ rate, CoO concentration, NiO concentration, CeO$_2$ concentration, TiO$_2$ concentration, and Se concentration,. The numerals in Tables are indicated as a percentage of the weight. Tables 1-3 also show the optical properties of the respective samples.

Table 1

| | Example | 1 | 2 | 3 | 4 | 5 | 6 |
|---|---|---|---|---|---|---|---|
| base glass composition [wt. %] | $SiO_2$ | 70.5 | 70.5 | 69.5 | 70.5 | 70.5 | 70.5 |
| | $Al_2O_3$ | 1.8 | 1.8 | 1.8 | 1.8 | 1.8 | 1.8 |
| | $MgO$ | 3.8 | 3.8 | 3.8 | 3.8 | 3.8 | 3.8 |
| | $CaO$ | 7.8 | 7.8 | 7.8 | 7.8 | 7.8 | 7.8 |
| | $Na_2O$ | 13.9 | 13.9 | 13.9 | 13.9 | 13.9 | 13.9 |
| | $K_2O$ | 1.0 | 1.0 | 1.0 | 1.0 | 1.0 | 1.0 |
| | $B_2O_3$ | 0.0 | 0.0 | 1.0 | 0.0 | 0.0 | 0.0 |
| colorant [wt. %] | $NiO$ | 0.009 | 0.012 | 0.018 | 0.020 | 0.001 | 0.007 |
| | $CoO$ | 0 | 0.004 | 0.008 | 0.005 | 0.002 | 0.002 |
| | $TiO_2$ | 0.03 | 0.5 | 0.03 | 0.03 | 0.03 | 0.03 |
| | $CeO_2$ | | | | 0.5 | | |
| | $T-Fe_2O_3$ | 1.25 | 1 | 1.1 | 1 | 1.7 | 1.5 |
| | $FeO/T-Fe_2O_3$ [%] | 27 | 28 | 26 | 26 | 18 | 29 |
| optical property | YA[%] | 59.1 | 49.8 | 48.7 | 48.0 | 52.8 | 49.8 |
| | TG[%] | 29.9 | 32.6 | 33.1 | 33.0 | 28.3 | 25.6 |
| | Tuv[%] | 9.3 | 9.7 | 11.5 | 8.5 | 4.5 | 6.1 |
| | DW[nm] | 532 | 512 | 500 | 502 | 538 | 507 |
| | Pe[%] | 4.3 | 3.9 | 5.2 | 4.7 | 6.8 | 4.7 |
| | a* | −11.5 | −12.2 | −11.3 | −11.3 | −14.9 | −13.5 |
| | b* | 5.7 | 3.9 | 1.2 | 1.9 | 7.4 | 3.5 |

Table 2

| | Example | 7 | | 8 | | 9 | | 10 | |
|---|---|---|---|---|---|---|---|---|---|
| base glass composition [wt. %] | $SiO_2$ | 70. 5 | | 70. 5 | | 70. 5 | | 70. 5 | |
| | $Al_2O_3$ | 1. 8 | | 1. 8 | | 1. 8 | | 1. 8 | |
| | $MgO$ | 3. 8 | | 3. 8 | | 3. 8 | | 3. 8 | |
| | $CaO$ | 7. 8 | | 7. 8 | | 7. 8 | | 7. 8 | |
| | $Na_2O$ | 13. 9 | | 13. 9 | | 13. 9 | | 13. 9 | |
| | $K_2O$ | 1. 0 | | 1. 0 | | 1. 0 | | 1. 0 | |
| | $B_2O_3$ | | | | | | | | |
| colorant [wt. %] | $NiO$ | 0. 013 | | 0. 01 | | 0. 007 | | 0. 007 | |
| | $CoO$ | 0. 002 | | 0. 002 | | 0. 002 | | 0. 002 | |
| | $TiO_2$ | 0. 03 | | 0. 03 | | 0. 1 | | 0. 03 | |
| | $CeO_2$ | 0. 1 | | 0 | | 0 | | 0 | |
| | $T-Fe_2O_3$ | 1. 3 | | 1. 3 | | 1. 4 | | 1. 6 | |
| | $FeO/T-Fe_2O_3$ [%] | 27. 8 | | 25. 9 | | 27. 4 | | 27. 4 | |
| | before/after reinforcement | before | after | before | after | before | after | before | after |
| optical property | YA[%] | 51. 7 | 52. 7 | 55. 2 | 54. 5 | 53. 1 | 52. 6 | 48. 4 | 47. 9 |
| | TG[%] | 28. 9 | 28. 6 | 31. 3 | 31. 2 | 28. 4 | 28. 5 | 24. 6 | 24. 5 |
| | Tuv[%] | 8. 5 | 6. 9 | 8. 2 | 5. 9 | 7. 5 | 5. 3 | 5. 0 | 3. 3 |
| | DW[nm] | 503. 0 | 505. 4 | 511. 7 | 514. 3 | 506. 4 | 516. 3 | 512. 4 | 527. 5 |
| | Pe[%] | 4. 7 | 4. 1 | 3. 6 | 2. 7 | 4. 4 | 3. 7 | 4. 9 | 4. 5 |
| | a* | -11. 9 | -11. 2 | -11. 5 | -11. 0 | -12. 6 | -12. 1 | -13. 9 | -13. 4 |
| | b* | 2. 2 | 3. 1 | 3. 7 | 4. 7 | 3. 1 | 4. 4 | 4. 5 | 6. 1 |

Table 3

| Comparative Example | | 1 | 2 | 3 | 4 | 5 |
|---|---|---|---|---|---|---|
| base glass composition [wt. %] | $SiO_2$ | 70.5 | 70.5 | 70.5 | 72.2 | 72.1 |
| | $Al_2O_3$ | 1.8 | 1.8 | 1.8 | 0.1 | 0.7 |
| | $MgO$ | 3.8 | 3.8 | 3.8 | 3.8 | 3.8 |
| | $CaO$ | 7.8 | 7.8 | 7.8 | 8.8 | 8.9 |
| | $Na_2O$ | 13.9 | 13.9 | 13.9 | 13.3 | 14.2 |
| | $K_2O$ | 1.0 | 1.0 | 1.0 | 0.1 | 0.1 |
| | $B_2O_3$ | | | | | |
| colorant [wt. %] | $NiO$ | 0.030 | 0 | 0.027 | 0 | 0 |
| | $CoO$ | 0.012 | 0 | 0.009 | 0.002 | 0.006 |
| | $Se$ | 0 | 0 | 0 | 0.0009 | 0 |
| | $TiO_2$ | 0.03 | 0.03 | 0.03 | 0 | 0 |
| | $CeO_2$ | 0 | 0 | 0 | 0 | 0 |
| | $T-Fe_2O_3$ | 1.3 | 1.3 | 0.85 | 1.0 | 1.5 |
| | $FeO/T-Fe_2O_3$ [%] | 14.8 | 23.1 | 23.5 | 35 | 26.6 |
| optical property | YA[%] | 38.9(31.5) | 65.3(73.0) | 46.1 | 52 | 45.8 |
| | TG[%] | 31.6(24.6) | 35.0(44.6) | 34.7 | 28 | 26.8 |
| | Tuv[%] | 6.8(3.9) | 6.9(12.9) | 15.7 | 15 | |
| | DW[nm] | 496.0(496.1) | 516.4(515.6) | 491.7 | 496 | 490 |
| | Pe[%] | 5.7(6.9) | 3.8(2.7) | 6.9 | 5.3 | 10.8 |
| | a* | -9.4(-10.6) | -13.1(-9.6) | -8.5 | -9.5 | |
| | b* | -0.2(-0.2) | 4.8(3.5) | -2.2 | 0.3 | |
| note | | *1 | *2 | | | *3 |

*1: in parentheses, a reduced value based on a thickness of 5mm
*2: in parentheses, a reduced value based on a thickness of 2.8mm
*3: in parentheses, a value at a thickness of 3.8mm

Tables 1-3 show the followings;

Examples 1-10 are within the scope of claim 1, and also within the scope of claim 2.

Table 1 shows that all of the samples of Examples 1-10 with a thickness of 4 mm have the dominant wavelength (DW) in a range of 490 to 550 nm (nanometers) measured by using C.I.E. illuminant C, the ultraviolet transmittance (Tuv) of not greater than 15%, and the excitation purity (Pe) of less than 8%. These samples also have the $FeO/T\text{-}Fe_2O_3$ ratio in a range between 10% and 40%, and the chromaticity expressed as a* and b* in ranges of $-15\leqq a^*\leqq -5$ and $-5\leqq b^*\leqq 8$.

Among these samples, the samples of Examples 2-10 are within the scope of claim 3 and also claim 4. The samples of Examples 2-10 have more desirable color shade and properties than Example 1 due to including CoO.

Examples 1 and 5-10 are within the scope of claim 6. These samples exhibit that the sufficient amount of $T\text{-}Fe_2O_3$ can easily improve the ultraviolet and infrared absorbability.

Examples 2 and 9 including $TiO_2$ in order to improve the ultraviolet absorption and examples 4 and 7 similarly including $CeO_2$ in an amount within the range of claim 7 are shown to be improved the ultraviolet absorption without losing the visible light transmittance and the solar energy transmittance. The other Examples except Examples 2, 4, 7 and 9 also include $TiO_2$, but only as the impurity in the raw materials.

According to Examples 7-10, the glass compositions and the optical properties before and after reinforcement process by air blasting are explained. These samples of Examples 7-10, all of which have the middle visible light transmittance and the low heat rays and ultraviolet transmittance, are shown to be reduced the ultraviolet transmittance by about 1 to 2%. That is, the reinforcement varies the coordination number of oxide around $Ni^{2+}$ from 6 into 4 and thus varies the optical absorption to change the shade of the glass. The absorption of $Ni^{2+}$ with tetrahedral coordination exists from 500 to 640 nanometers. Therefore, the excitation purity would be reduced to obtain the preferable shade due to the complementary green color of $Ni^{2+}$ with tetrahedral coordination.

The reinforced glass according to Examples 7-10 can be expected the good balance with the glass having a high visible light transmittance and green color shade in case of arrangement close to each other, the effect of preventing degradation and discoloration of interior materials and the privacy protecting effect when the glass is used for a rear window glass of a vehicle, a window of a building, or the like.

All of Comparative Examples 1-4 have compositions out of the range of the present invention. Comparative Example 1 contains CoO as a colorant of which amount is out of the scope of the present invention, Comparative Example 2 contains NiO amount of which is out of the scope of the present invention, Comparative Examples 3 contains $T\text{-}Fe_2O_3$ an amount of which is out of the present invention. Comparative Example 4 has the same composition as the PCT 8-506314 as referred above. Comparative Example 5 has the same composition as the example of the PCT 8-503300 as referred above.

These results explain that all samples of Comparative Examples 1-3 cannot combine the middle visible light transmittance, the low solar energy transmittance or the low ultraviolet transmittance just as Examples. The sample of Comparative Example 4 comprising a large amount of the expensive and toxic selenium is unpreferable in terms of the production and the environment. The sample of Comparative Example 5 has a high excitation purity since the glass of the sample is too blue tint as compared to Examples and cannot obtain the desired green color shade.

As detailed above, according to the present invention, an ultraviolet/infrared absorbent middle transmittance glass, which exhibits a middle visible light transmittance, a low solar energy transmittance, and a low ultraviolet transmittance and which has a green color shade can be provided without any toxic substances such as selenium, crome, etc., so that the glass of the present invention reduces significantly the load on the environment compared with the prior art.

The ultraviolet/infrared absorbent middle transmittance glass is harmonious with the glass having a high visible light transmittance and a brighter green shade in case that the glasses are arranged adjacently each other, the glass of the invention prevents degradation and discoloration of interior materials and protects privacy when the glass is used for a rear window of a vehicle, a window of a building, or the like.

**Claims**

**1.** An ultraviolet/infrared absorbent middle transmittance glass consisting of base glass comprising:

65 to 80 wt. % $SiO_2$;
0 to 5 wt. % $Al_2O_3$;
0 to 10 wt. % MgO;
5 to 15 wt. % CaO wherein a total amount of MgO and CaO is between 5 and 15 wt. %;
10 to 18 wt. % $Na_2O$;
0 to 5 wt. % $K_2O$ wherein a total amount of $Na_2O$ and $K_2O$ is between 10 and 20 wt. %; and

0 to 5 wt. % $B_2O_3$,

and colorants comprising:

1.0 to 1.7 wt. % total iron oxide (T-$Fe_2O_3$) expressed as $Fe_2O_3$;
0.001 to 0.02 wt. % NiO; and
0 to 80 ppm CoO,

wherein said glass with a thickness between 2 mm and 6 mm has a dominant wavelength of 490 to 550 nanometers by using C.I.E. illuminant C, an ultraviolet transmittance (Tuv) of not more than 15% specified by ISO, and an excitation purity of less than 8%,
wherein FeO expressed as $Fe_2O_3$ is between 10 wt. % and 40 wt. % of T-$Fe_2O_3$.

2. An ultraviolet/infrared absorbent middle transmittance glass as claimed in claim 1, wherein the glass has a color defined by the following C.I.E.L.A.B. coordinates $-15 \leqq a^* \leqq -5$ and $-5 \leqq b^* \leqq 8$.

3. An ultraviolet/infrared absorbent middle transmittance glass as claimed in claim 1, wherein said glass has a visible light transmittance (YA) by the C.I.E. illuminant A of less than 65%, a solar energy transmittance (TG) of less than 50% when the values are expressed based on a thickness of 2.8 mm, and has a solar energy transmittance (TG) of not greater than 35% when the values are expressed based on a thickness of 5 mm

4. An ultraviolet/infrared absorbent middle transmittance glass as claimed in claim 1, wherein said colorant comprises CoO in a range between 5 and 80 ppm.

5. An ultraviolet/infrared absorbent middle transmittance glass as claimed in claim 1, wherein said colorant comprises NiO in a range between 0.002 wt. % and 0.02 wt. %.

6. An ultraviolet/infrared absorbent middle transmittance glass as claimed in claim 1, wherein T-$Fe_2O_3$ expressed as $Fe_2O_3$ is more than 1.2 wt. % and not more than 1.7 wt. %.

7. An ultraviolet/infrared absorbent middle transmittance glass as claimed in claim 1, wherein said colorant further comprises $CeO_2$ of no greater than 1.0 wt. % and/or $TiO_2$ of no greater than 1.0 wt. %.

**Patentansprüche**

1. Ultraviolett/Infrarot-absorbierendes Glas mit mittlerer Durchlässigkeit, zusammengesetzt aus einem Grundglas, umfassend:

65 bis 80 Gew.-% $SiO_2$;
0 bis 5 Gew.-% $Al_2O_3$;
0 bis 10 Gew.-% MgO;
5 bis 15 Gew.-% CaO, wobei die Gesamtmenge an MgO und CaO zwischen 5 und 15 Gew.-% liegt;
10 bis 18 Gew.-% $Na_2O$;
0 bis 5 Gew.-% $K_2O$, wobei die Gesamtmenge an $Na_2O$ und $K_2O$ zwischen 10 und 20 Gew.-% liegt; und
0 bis 5 Gew.-% $B_2O_3$;

und Farbstoffe, umfassend:

1,0 bis 1,7 Gew.-% Gesamteisenoxid (T-$Fe_2O_3$), ausgedrückt als $Fe_2O_3$;
0,001 bis 0,02 Gew.-% NiO; und
0 bis 80 ppm CoO,

wobei das Glas mit einer Dicke zwischen 2 mm und 6 mm eine dominante Wellenlänge von 490 bis 550 Nanometer unter Verwendung von C.I.E. Illuminant C, eine Ultraviolett-Durchlässigkeit (Tuv) von nicht mehr als 15%, spezifiziert durch ISO, und eine Anregungsreinheit von weniger als 8% besitzt,
wobei FeO, ausgedrückt als $F_2O_3$, zwischen 10 Gew.-% und 40 Gew.-% T-$Fe_2O_3$ liegt.

**2.** Ultraviolett/Infrarot-absorbierendes Glas mit mittlerer Durchlässigkeit nach Anspruch 1, wobei das Glas eine Farbe besitzt, definiert durch die folgenden C.I.E.L.A.B.-Koordinaten $-15 \leq a^* \leq -5$ und $-5 \leq b^* \leq 8$.

**3.** Ultraviolett/Infrarot-absorbierendes Glas mit mittlerer Durchlässigkeit nach Anspruch 1, wobei das Glas eine Durchlässigkeit für sichtbares Licht (YA) gemäß C.I.E. Illuminant A von weniger als 65%, eine Sonnenenergie-Durchlässigkeit (TG) von weniger als 50%, wenn die Werte bezogen auf eine Dicke von 2,8 mm ausgedrückt werden, und eine Sonnenenergie-Durchlässigkeit (TG) von nicht mehr als 35%, wenn die Werte auf eine Dicke von 5 mm ausgedrückt werden, besitzt.

**4.** Ultraviolett/Infrarot-absorbierendes Glas mit mittlerer Durchlässigkeit nach Anspruch 1, wobei der Farbstoff CoO in einem Bereich zwischen 5 und 80 ppm enthält.

**5.** Ultraviolett/Infrarot-absorbierendes Glas mit mittlerer Durchlässigkeit nach Anspruch 1, wobei der Farbstoff NiO im Bereich zwischen 0,002 Gew.-% und 0,02 Gew.-% enthält.

**6.** Ultraviolett/Infrarot-absorbierendes Glas mit mittlerer Durchlässigkeit nach Anspruch 1, wobei T-$Fe_2O_3$, ausgedrückt als $Fe_2O_3$, in einer Menge von nicht mehr als 1,2 Gew.-% und nicht mehr als 1,7 Gew.-% vorhanden ist.

**7.** Ultraviolett/Infrarot-absorbierendes Glas mit mittlerer Durchlässigkeit nach Anspruch 1, wobei der Farbstoff weiter $CeO_2$ in einer Menge von nicht mehr als 1,0 Gew.-% und/oder $TiO_2$ in einer Menge von nicht mehr als 1,0 Gew.-% enthält.

**Revendications**

**1.** Verre à moyenne transmission absorbant les rayonnements ultraviolets/infrarouges comprenant :

65 à 80% en poids de $SiO_2$
0 à 5% en poids de $Al_2O_3$
0 à 10% en poids de MgO
5 à 15% en poids de CaO où une quantité totale de MgO et CaO est entre 5 et 15% en poids
10 à 18% en poids de $Na_2O$
0 à 5% en poids de $K_2O$ où une quantité totale de $Na_2O$ et $K_2O$ est entre 10 et 20% en poids et
0 à 5% en poids de $B_2O_3$

et des colorants comprenant :

1,0 à 1,7% en poids d'oxyde de fer total (T-$Fe_2O_3$) exprimé sous forme de $Fe_2O_3$ ;
0,001 à 0,02% en poids de NiO et
0 à 80 ppm de CoO

dans lequel ledit verre a une épaisseur de 2 à 6 mm, a une longueur d'onde dominante de 490 à 550 nanomètres en utilisant du C illuminant C.I.E, une transmission ultraviolet (Tuv) d'au plus 15%, spécifiée par ISO et une pureté d'excitation de moins de 8%,
dans lequel le FeO exprimé sous forme de $Fe_2O_3$ est entre 10% en poids et 40% en poids de T-$Fe_2O_3$

**2.** Verre à moyenne transmission absorbant les rayons ultraviolets/infrarouges selon la revendication 1, dans lequel le verre a une couleur définie par les coordonnées C.I.E.L.A.B. suivantes : $-15 \leq a^* \leq -5$ et $-5 \leq b^* \leq 8$

**3.** Verre à moyenne transmission absorbant les rayons ultraviolets/infrarouges selon la revendication 1, dans lequel ledit verre a une transmission de la lumière visible (Y A) par l'illuminant A C.I.E. de moins de 65% , une transmission de l'énergie solaire (TG) de moins de 50% quand les valeurs sont exprimées sur la base d'une épaisseur de 2,8 mm et a une transmission de l'énergie solaire (TG) d'au plus 35% quand les valeurs sont exprimées sur la base d'une épaisseur de 5 mm.

**4.** Verre à moyenne transmission absorbant les rayons ultraviolets/infrarouges selon la revendication 1, dans lequel ledit colorant comprend du CoO, dans une proportion comprise entre 5 et 80 ppm.

5. Verre à moyenne transmission absorbant les rayons ultraviolets/infrarouges selon la revendication 1, dans lequel ledit colorant comprend du NiO, pour une valeur de 0,002% en poids à 0,02% en poids

6. Verre à moyenne transmission absorbant les rayons ultraviolets/infrarouges selon la revendication 1, dans lequel le T-$Fe_2O_3$ exprimé sous forme de $Fe_2O_3$ est supérieur à 1,2% en poids et ne dépasse pas 1,7% en poids.

7. Verre à moyenne transmission absorbant les rayons ultraviolets/infrarouges selon la revendication 1, dans lequel ledit colorant comprend en outre du $CeO_2$ d'au plus 1,0% en poids et/ou du $TiO_2$ d'au plus 1,0% en poids.